# FASCICULE DE BREVET EUROPEEN

(11) **EP 0 685 388 B1**
(45) Date de publication et mention de la délivrance du brevet: **02.09.1998**
(21) Numéro de dépôt: 95401144.1
(22) Date de dépôt: 17.05.1995
(51) Int. Cl.: B64D 1/06

(54) **Dispositif mécanique d'éjection comportant un piston mobile commandé en aller-retour**
Mechanische Vorrichtung für ein Ausstossgerät mit einem beweglichen Kolben für Hin- und Herbewegung
Mechanical device for an ejection system comprising an auto-reverse piston

(30) Priorité: 31.05.1994 FR 9406622
(43) Date de publication de la demande: 06.12.1995
(73) Titulaire: AEROSPATIALE Société Nationale Industrielle, 75781 Paris Cédex 16 (FR)
(72) Inventeur: Viala, Jean, F-94220 Charenton le Pont (FR); Bohas, Jean-Claude, F-92140 Clamart (FR); Florentin, Yves, F-78180 Montigny le Bretonneux (FR); Chicot, Serge, F-78410 Aubergenville (FR)
(74) Mandataire: Rinuy, Santarelli

(56) Documents cités:
- FR-A- 2 156 425

## Description

L'invention concerne un dispositif d'éjection, notamment pour le largage de charges utiles à partir de véhicules aéronautiques ou spatiaux, dans lequel un piston d'éjection ou poussoir est commandé, mécaniquement, non seulement dans le sens de l'éjection ou poussée, mais aussi dans le sens inverse (on parle alors, parfois, de ravalage du poussoir).

Les éjecteurs de charges (réservoirs ou autres) à partir de véhicules aéronautiques ou spatiaux se composent habituellement de pistons (télescopiques ou non) incorporés dans un cylindre alimenté par une source pyrotechnique ou pneumatique. Ces pistons, selon les cas, agissent directement ou indirectement sur la charge à éjecter.

Des exemples de tels éjecteurs sont donnés par les documents FR-A-2.597.553, FR-A-2.671.175, FR-A-2.578.041 ou FR-A-2.423.397.

D'autres éjecteurs, quoique ne comportant expressément qu'un ensemble piston-cylindre, sont de principe très voisin, avec des moyens à pression de fluide du type sac gonflable (voir par exemple le document FR-A-2.664.373).

Ces ensembles piston-cylindre (ou similaires) nécessitent, pour être performants, l'obtention d'une bonne étanchéité ce qui, combiné aux contraintes de tenue à la pression et aux gaz chauds (en cas de déclenchement pyrotechnique) impose l'emploi de matériaux, et un dimensionnement, qui ne favorisent pas les gains de masse.

Sur le plan encombrement, la hauteur des éjecteurs existants, c'est-à-dire la dimension parallèlement à la course utile d'éjection, est toujours supérieure à cette dernière ce qui peut poser des problèmes d'implantation.

Enfin et surtout, les éjecteurs ont généralement un fonctionnement irréversible. En effet, lorsque les pistons ont repoussé la charge, ils demeurent classiquement en position sortie en dehors de l'éjecteur, ce qui introduit une traînée préjudiciable et une usure rapide desdits pistons consécutive à une exposition aux agressions externes.

Il est de toute façon nécessaire de remettre en état (réarmer) les éjecteurs après chaque fonctionnement.

Le retour en position initiale du piston n'est généralement pas prévu (le réarmement se fait alors indépendamment du fonctionnement, après retour au sol par exemple).

Des solutions ont toutefois été proposées pour "ravaler" les pistons à l'intérieur de leurs cylindres ; des exemples sont donnés dans les documents FR-A-2.671.175 et FR-A-2.423.397 précités. Néanmoins, un tel ravalage nécessite actuellement des dispositifs annexes spécifiques (dégazage + ravalage) qui alourdissent et compliquent l'ensemble de l'éjecteur lui-même et en augmentent l'encombrement.

L'invention a pour objet de pallier les inconvénients précités grâce à un dispositif d'éjection à piston d'éjection commandé mécaniquement en aller-retour, qui soit de faible encombrement (en particulier parallèlement à la course utile d'éjection, de manière à faciliter son implantation en un maximum de points d'emport sur le véhicule considéré), de faible masse (en permettant l'emploi de matériaux légers selon un faible dimensionnement, ce qui est une contrainte classique pour les équipements aéroportés ou spatiaux), rapide de mise en oeuvre (le réarmement suit immédiatement et automatiquement l'éjection), simple et de maintenance aisée (sensiblement pas d'entretien, faible coût d'exploitation), sans pénalité sur la performance de l'éjection elle-même (sans nuire en particulier à la possibilité de maîtriser, de manière connue, l'attitude de la charge pendant l'éjection).

L'invention propose à cet effet un dispositif mécanique d'éjection comportant un piston d'éjection mobile selon un axe de coulissement entre une position de repos et une position de service, ce dispositif comportant en outre, pour la commande en aller-retour de ce piston :
- un levier sensiblement transversal à l'axe de coulissement, articulé d'une part sur un premier axe fixe d'articulation disposé transversalement à distance de l'axe de coulissement et d'autre part sur un premier axe mobile d'articulation attelé axialement au piston et mobile le long de l'axe de coulissement entre une position de repos et une position de service, ce levier comportant en outre un second axe mobile d'articulation ;
- une bielle articulée sur un second axe fixe d'articulation et comportant de troisième et quatrième axes mobiles d'articulation ;
- une tige de commande sensiblement transversale à l'axe de coulissement, articulée sur le troisième axe mobile d'articulation et adaptée à entraîner, longitudinalement à elle-même, ce troisième axe mobile d'articulation dans un sens unique de déplacement depuis une position de repos jusque dans une position finale ;
- une biellette articulée d'une part sur le second axe mobile d'articulation et d'autre part sur le quatrième axe mobile d'articulation ;
   ce levier, cette bielle, cette tige de commande et cette biellette étant tels que les axes fixes ou mobiles d'articulation sont parallèles les uns aux autres en étant perpendiculaires à la fois à l'axe de coulissement et à la tige de commande, lesdits axes fixes d'articulation étant décalés parallèlement à l'axe de coulissement, et la bielle et la biellette formant un ensemble déformable ayant une configuration de départ dans laquelle les premier et troisième axes mobiles d'articulation sont dans leurs positions respectives de repos, et le quatrième axe mobile d'articulation est, par rapport à un plan de référence contenant les seconds axes fixe et mobile d'articulation, à l'opposé du sens de déplacement du troisième axe mobile d'articulation, cet ensemble déformable ayant une configuration intermédiaire dans laquelle le premier axe mobile d'articulation est dans sa position de service et le quatrième axe mobile d'articulation est contenu dans le plan de référence, et une configuration finale où le premier axe mobile d'articulation est au moins approximativement en sa position de repos et où le quatrième axe mobile d'articulation est dans une position au moins approximativement symétrique, par rapport audit plan, de la position de ce quatrième axe mobile d'articulation dans la configuration de départ de l'ensemble déformable.

Il est à noter qu'un axe désigne ici à la fois l'axe géométrique que le (ou les) élément(s) qui le matérialise(nt) ; c'est ainsi notamment que, ainsi qu'on le verra, un axe peut être réalisé en deux parties espacées situées dans le prolongement l'une de l'autre.

On appréciera que le dispositif de l'invention répond au problème technique précité. En effet :
- la commande agissant sur le piston éjecteur est conçue pour assurer, après l'éjection, le retour du piston à la position initiale en utilisant le seul mouvement rectiligne de la commande générale du lance-charge (c'est-à-dire du dispositif assurant la synchronisation des dernières opérations de lancement et d'éjection, en tous les endroits où cela est nécessaire) sans exiger une inversion du mouvement de celle-ci,
- le dispositif est un module qui est simplement lié de façon mécanique (bielle) à la transmission générale du mouvement qui est commandée par une source pyrotechnique ou pneumatique. De ce fait, le dispositif ne nécessite pas d'étanchéité aux gaz chauds ou à des pressions importantes. Pour ces raisons, le piston peut comporter des matériaux légers allant dans le sens d'une réduction de masse et n'exige pas des tolérances précises de fabrication,
- l'incorporation de la commande transversalement au piston, peut donc se faire dans la hauteur du dispositif, ce qui lui assure une hauteur limitée à la course utile d'éjection ; de ce fait, le dispositif confère au lance-charge une hauteur minimale,
- le principe de conception assure une mise en oeuvre rapide limitée au seul réarmement du mécanisme du lance-charge,
- son principe et les traitements de surface des matériaux permettant le fonctionnement à sec des différentes pièces en mouvement se satisfont d'une maintenance allégée (ni graissage, ni lubrification),
- de par sa nature, la commande mécanique du dispositif d'éjection reliée à la transmission générale du lance-charge permet d'assurer le synchronisme de déplacement entre deux ou plusieurs dispositifs situés à des distances quelconques.

Selon des enseignements préférés de l'invention, éventuellement combinés :
- le premier axe mobile d'articulation est constitué par une extrémité partiellement cylindrique du levier, engagée dans un logement cylindrique transversal ménagé dans une noix adaptée à coulisser, perpendiculairement à l'axe de coulissement et aux axes fixes et mobiles d'articulation,
- le second axe mobile d'articulation est disposé sur le levier entre les premiers axes fixe et mobile d'articulation ; en variante, ce second axe mobile est situé à l'opposé du premier axe mobile d'articulation par rapport au premier axe fixe,
- le second axe mobile d'articulation est sensiblement à mi-chemin entre ces premiers axes fixe et mobile d'articulation,
- le sens unique de déplacement est orienté vers l'opposé de l'axe de coulissement ; en variante il est orienté vers cet axe,
- la tige de commande est située entre les premier et second axes fixes d'articulation, et entre les second et quatrième axes mobiles d'articulation,
- le quatrième axe mobile d'articulation est à des distances au moins approximativement égales vis à vis du second axe fixe d'articulation et du second axe mobile d'articulation,
- la tige de commande est dédoublée en deux parties encadrant la bielle, elle-même dédoublée en deux branches encadrant la biellette, elle-même dédoublée en deux parties encadrant le levier,
- le piston est télescopique,
- le piston comporte un piston central engagé dans un piston tubulaire lui-même engagé dans un corps fixe, des bielles symétriques par rapport à l'axe de coulissement étant montées pivotantes en une portion médiane autour d'axes liés au piston tubulaire et articulées, en une extrémité, sur des axes d'articulation liés au corps fixe et, en une autre extrémité, sur un axe commun d'articulation lié au piston central, ces bielles comportant des lumières longitudinales coopérant avec certains desdits axes.

Des objets, caractéristiques et avantages de l'invention ressortent de la description qui suit, donnée à titre d'exemple non limitatif, en regard des dessins annexés sur lesquels :
- la figure 1 est une vue en perspective éclatée d'un dispositif d'éjection conforme à l'invention, en configuration initiale,
- la figure 2 en est une vue en coupe axiale, parallèlement aux tiges de manoeuvre de la figure 1,
- la figure 3 en est une vue en coupe axiale, selon le plan de coupe III-III de la figure 2,
- la figure 4 est une vue en coupe axiale de ce dispositif, selon le même plan de coupe que pour la figure 2, mais en une configuration intermédiaire de ce dispositif,
- la figure 5 est une vue en coupe axiale selon le plan de coupe V-V de la figure 4,
- la figure 6 est une vue en coupe axiale de ce dispositif, selon le même plan de coupe que pour les figures 2 et 4, mais pour la configuration finale de ce dispositif, et
- la figure 7 est une vue axiale selon le plan de coupe VII-VII de la figure 6.

Le dispositif d'éjection représenté comporte deux parties : un ensemble de poussée A qui assure la poussée à la charge à éjecter (ici vers le bas) et un ensemble mécanique de commande B qui commande le mouvement aller-retour des pièces mobiles de l'ensemble de poussée A.

L'ensemble de poussée A est avantageusement du type à piston télescopique, ce qui contribue à minimiser l'encombrement en hauteur, c'est-à-dire parallèlement à un axe de coulissement Z-Z selon lequel doit se faire la poussée.

L'ensemble de poussée A comprend :
- un corps principal 1 qui assure le guidage en coulissement d'un manchon 2 formant piston tubulaire intermédiaire, qui assure à son tour le guidage en coulissement d'un piston central 3,
- deux bielles 4 coplanaires ou situées dans les plans parallèles qui pivotent en une portion médiane autour d'axes de pivotement 5 liés-axialement au piston intermédiaire 2, et qui sont articulées, en une première extrémité sur le corps 1 au moyen d'axes d'articulation 6, et en une seconde extrémité sur le piston central 3 au moyen d'un axe commun d'articulation 7.

Les pistons 2 et 3 forment conjointement un piston télescopique. Du fait des bielles 4, ces pistons 2 et 3 subissent des déplacements homothétiques par rapport au corps 1.

Pour le passage des bielles des lumières axiales 1A, 2A et 3A sont ménagées dans le corps 1, dans le piston intermédiaire 2 et dans le piston 3, les axes 5 étant fixés à ce piston intermédiaire en travers des lumières axiales 2A et l'axe commun 7 étant en travers de la lumière 3A.

Pour permettre le pivotement des bielles 4, celles-ci sont pourvues, pour coopérer avec deux des trois axes 5, 6 ou 7, de lumières longitudinales 8. De manière préférée, ces lumières longitudinales sont ménagées aux extrémités des bielles 4.

Les bielles sont globalement symétriques par rapport à l'axe de coulissement et les axes 5, 6 et 7 sont parallèles les uns aux autres et perpendiculaires à cet axe de coulissement.

Le piston 3 a deux positions extrêmes pour lesquelles les bielles présentent une inclinaison minimale vis à vis de l'axe de coulissement (il s'agit de l'angle entre la dimension maximale des bielles et cet axe). Dans ces positions extrêmes, l'axe commun 7 vient dans l'une ou l'autre de deux positions symétriques vis à vis du plan transversal des axes 6.

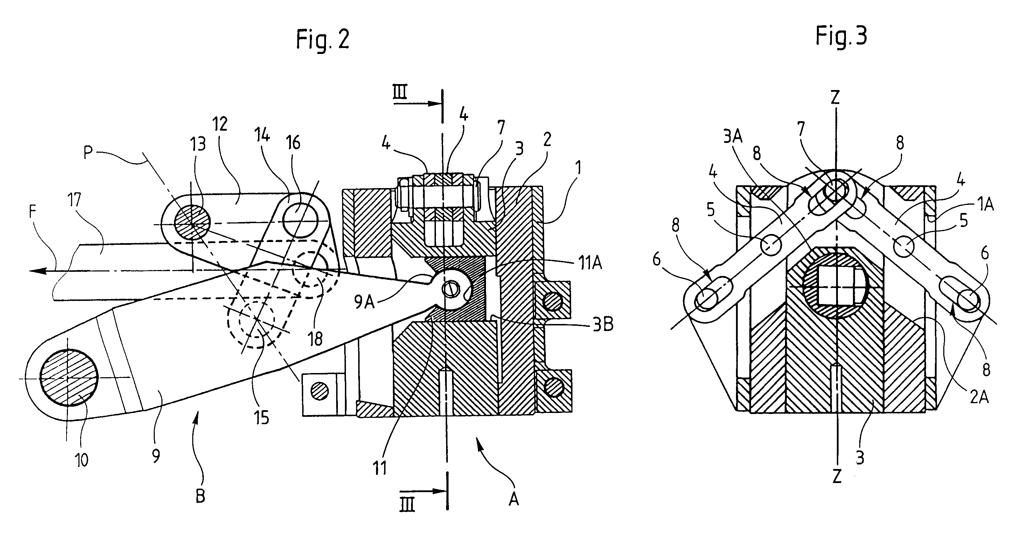

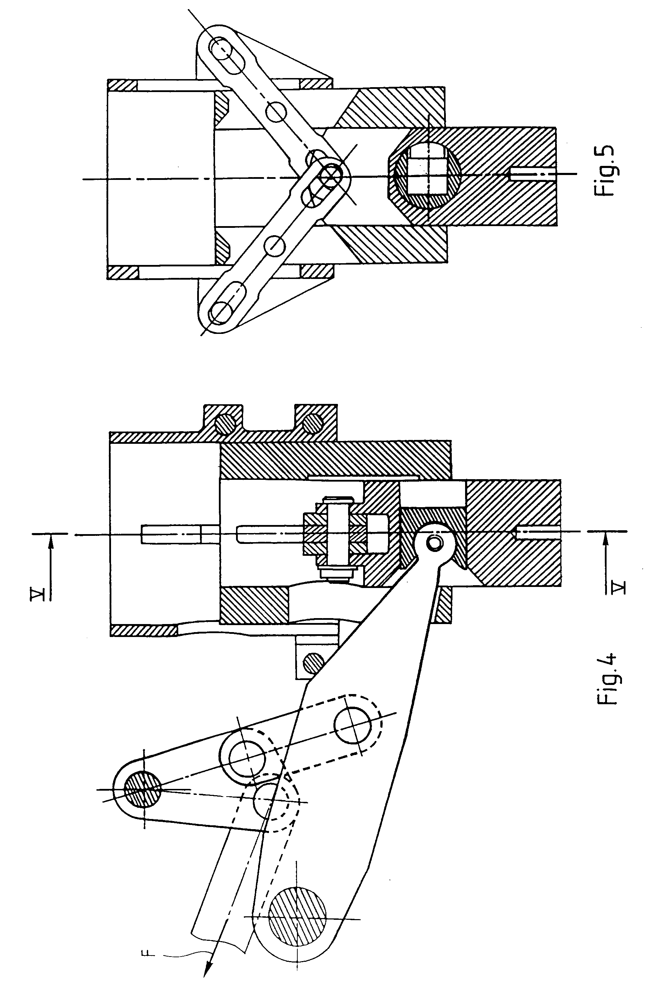

Une première de ces positions extrêmes apparaît à la figure 3 ; c'est une position de repos. L'autre de ces positions extrêmes est représentée à la figure 5 ; c'est une position de service pour laquelle le piston est déployé au maximum.

L'ensemble mécanique de commande B est destiné à commander automatiquement le déplacement du piston 3 depuis sa position de repos jusqu'à sa position de service puis son retour au moins approximativement en sa position de repos.

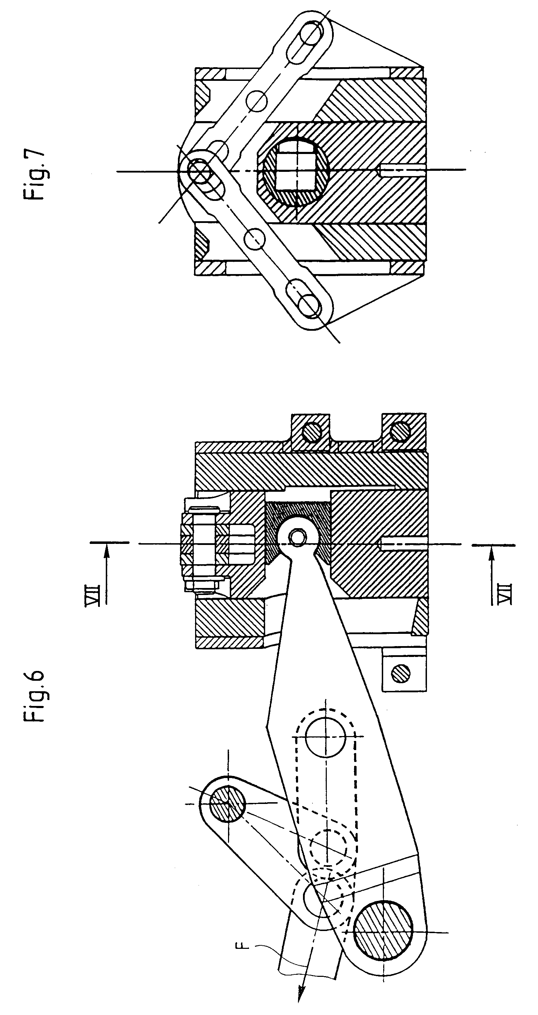

Cet ensemble mécanique de commande B comporte :
- un levier 9 sensiblement transversal à l'axe de coulissement, articulé d'une part sur un premier axe fixe d'articulation 10 disposé transversalement à distance de cet axe de coulissement et articulé d'autre part sur un premier axe mobile d'articulation attelé axialement au piston central 3, ici par une noix 11, ce levier comportant un axe mobile d'articulation 15,
- une bielle ou guignol 12 articulée sur un second axe fixe d'articulation 13, et comportant de troisième et quatrième axes mobiles d'articulation 18 et 16,
- une biellette 14 articulée sur le levier 9 au moyen du second axe mobile d'articulation 15 et sur le guignol 12 au moyen du quatrième axe mobile d'articulation 16,
- une tige de commande 17 sensiblement transversale à l'axe de coulissement Z-Z, articulée sur le guignol 12 au moyen du troisième axe mobile d'articulation 18, et adaptée à exercer sur ce dernier un effort longitudinal suivant cette tige en sorte de l'entraîner, dans un sens de déplacement unique schématisé par la flèche F, depuis une position de repos (voir figure 2) jusque dans une position finale (voir figure 6).

La noix 11 qui, dans l'exemple considéré, sert à atteler axialement, avec possibilité de pivotement, l'extrémité du levier 9 au piston 3, est montée dans le piston en sorte de pouvoir coulisser transversalement en fonction des variations d'inclinaison du levier 9 vis à vis de l'axe Z-Z, pour tenir compte que le levier 9 a une longueur constante. Elle est engagée dans un logement 3B, ici cylindrique circulaire, d'axe perpendiculaire aux axes 10 et Z-Z.

Cette noix 11 comporte un logement cylindrique 11A d'axe géométrique parallèle à l'axe 10 et débouchant latéralement vers cet axe par une fente d'amplitude angulaire inférieure à 180°, en conséquence de quoi la surface dudit logement cylindrique s'étend sur plus de 180°. L'extrémité 9A du levier est conformée en une tête cylindrique d'axe transversal à ce levier et de diamètre sensiblement égal à celui du logement cylindrique 11A. L'introduction de cette tête 9A dans le logement 11A est facile (par la droite lorsque l'on regarde la figure 3 ou 5 ou 7) tant que la noix est à l'extérieur du piston 3. Par contre, l'introduction de la noix dans le piston 3 verrouille la tête 9A dans ladite noix.

On appréciera que la tête 9A constitue ici un axe d'articulation.

En variante non représentée, la coopération entre le levier 9 et le piston 3 peut se faire d'une manière similaire à ce qui a été dit à propos de la coopération entre les bielles 4 et ce piston.

En fait, les axes fixes et mobiles d'articulation sont parallèles les uns aux autres en étant perpendiculaires à l'axe de coulissement Z-Z. Ils sont de préférence mais non nécessairement perpendiculaires aux axes 5, 6 et 7 sur lesquels sont articulées les bielles 4 et réciproquement.

Les axes fixes d'articulation 10 et 13 sont décalés en "hauteur", c'est-à-dire parallèlement à l'axe de coulissement.

La bielle ou guignol 12 et la biellette 14 forment un ensemble déformable ayant :
- une configuration de départ (voir la figure 2) dans laquelle les premier et troisième axes mobiles d'articulation 9A et 18 sont dans des positions initiales de repos et le quatrième axe mobile d'articulation 16 est derrière un plan de référence dont la trace est repérée P à la figure 2 et qui contient les seconds axes fixe et mobile d'articulation 13 et 15, en référence au du sens F de déplacement de la tige de commande 17,
- une configuration intermédiaire (voir la figure 4) dans laquelle le premier axe mobile d'articulation 9A est dans sa position de service (de même que le piston 3) et le quatrième axe mobile d'articulation est dans le plan de référence P, et
- une configuration finale (voir la figure 6) où le premier axe mobile d'articulation 9A est au moins approximativement en sa position de repos et où le quatrième axe mobile d'articulation 16 est, par rapport au plan de référence P, dans une position au moins approximativement symétrique de la position qu'a cet axe 16 dans la configuration de départ.

De nombreuses configurations relatives sont possibles entre les axes fixes et mobiles, qui satisfont les remarques générales qui précèdent. La configuration représentée sur les figures n'est donc qu'un exemple préféré de réalisation parmi diverses possibilités.

Pour des raisons de compacité transversale en référence à la course utile d'éjection (débattement de l'extrémité 9A), le deuxième axe mobile d'articulation 15 est de préférence situé entre les axes 10 et 9A, ici sensiblement à mi-chemin entre ceux-ci.

Pour des raisons de facilité d'implantation, la tige de commande 17 agit de préférence en traction, en s'éloignant de l'axe de coulissement

Pour des raisons de compacité en hauteur et de rigidité mécanique, la tige de commande 17 passe avantageusement entre les axes fixes d'articulation et entre les second et quatrième axes mobiles d'articulation 15 et 16.

Pour des raisons de compacité en hauteur, en largeur et pour des raisons de fiabilité, les axes 13, 16 et 15 forment un prisme triangulaire à angles non nuls.

Pour des raisons de compacité en service, le quatrième axe mobile d'articulation 16 est avantageusement à des distances au moins approximativement égales vis à vis du second axe mobile d'articulation 15 et vis à vis du second axe fixe d'articulation 13.

Le guignol 12 est ici une pièce monobloc à deux branches parallèles 12A et 12B solidaires d'un manchon 12C pivotant autour de l'axe fixe 13, la biellette 14 étant dédoublée en deux parties 14A et 14B encadrant le levier 9, mais encadrées par les branches parallèles 12A et 12B, la tige 17 étant dédoublée en deux parties 17A et 17B encadrant le guignol 12.

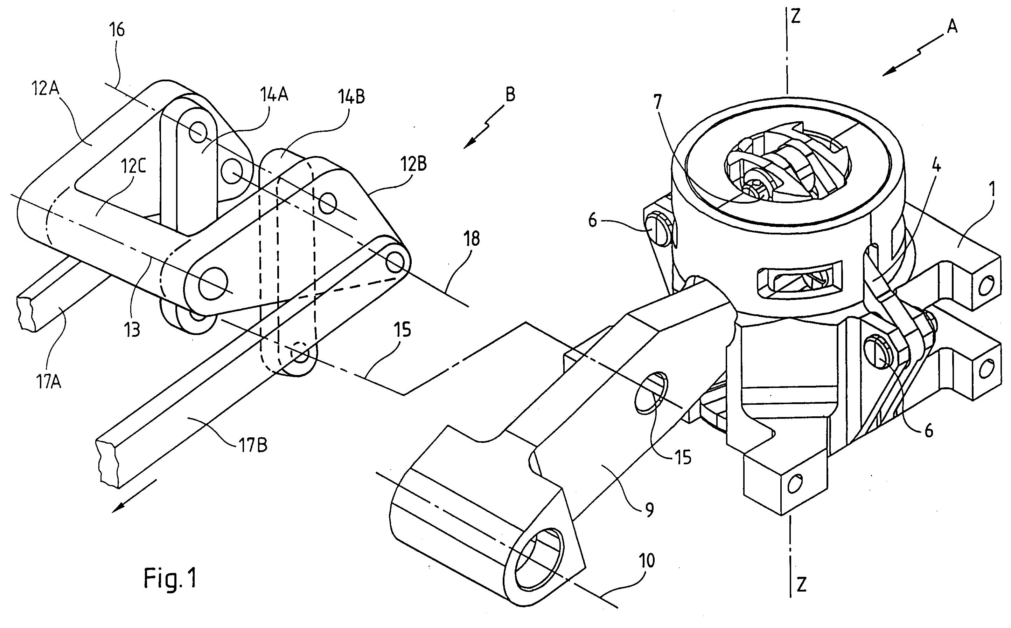

Comme représenté à la figure 1, le levier 9 comporte, pour des raisons de rigidité, un manchon transversal engagé autour de l'axe fixe 10.

Il va de soi que la description qui précède n'a été proposée qu'à titre d'exemple non limitatif et que de nombreuses variantes peuvent être proposées par l'homme de l'art sans sortir du cadre de l'invention.

C'est ainsi notamment que :
- la tige peut agir en poussée,
- la tige peut être située d'un même côté (soit au-dessus, soit en-dessous) des axes fixes, le quatrième axe mobile 16 venant en configuration intermédiaire, à l'opposé du second axe mobile vis à vis du second axe fixe,
- le second axe mobile 15 peut être à l'opposé du premier axe mobile 9A par rapport au premier axe fixe 10.

Un pion peut, par précaution, être prévu pour solidariser l'extrémité 9A dans la noix 11.

## Revendications

1. Dispositif mécanique d'éjection comportant un piston d'éjection mobile selon un axe de coulissement (Z-Z) entre une position de repos et une position de service, ce dispositif comportant en outre, pour la commande en aller-retour de ce piston :
- un levier (9) sensiblement transversal à l'axe de coulissement, articulé d'une part sur un premier axe fixe d'articulation (10) disposé transversalement à distance de l'axe de coulissement et d'autre part sur un premier axe mobile d'articulation (9A) attelé axialement au piston et mobile le long de l'axe de coulissement entre une position de repos et une position de service, ce levier comportant en outre un second axe mobile d'articulation (15) ;
- une bielle (12) articulée sur un second axe fixe d'articulation (13) et comportant de troisième (18) et quatrième (16) axes mobiles d'articulation ;
- une tige de commande (17) sensiblement transversale à l'axe de coulissement, articulée sur le troisième axe mobile d'articulation (18) et adaptée à entraîner, longitudinalement à elle-même, ce troisième axe mobile d'articulation dans un sens unique de déplacement (F) depuis une position de repos jusque dans une position finale ;
- une biellette (14) articulée d'une part sur le second axe mobile d'articulation (15) et d'autre part sur le quatrième axe mobile d'articulation (16) ;
ce levier, cette bielle, cette tige de commande et cette biellette étant tels que les axes fixes ou mobiles d'articulation sont parallèles les uns aux autres en étant perpendiculaires à la fois à l'axe de coulissement et à la tige de commande, lesdits axes fixes d'articulation étant décalés parallèlement à l'axe de coulissement, et la bielle et la biellette formant un ensemble déformable ayant une configuration de départ dans laquelle les premier (9A) et troisième (18) axes mobiles d'articulation sont dans leurs positions respectives de repos, et le quatrième axe mobile d'articulation (16) est, par rapport à un plan de référence (P) contenant les seconds axes fixe (13) et mobile (15) d'articulation, à l'opposé du sens de déplacement du troisième axe mobile d'articulation (18), cet ensemble déformable ayant une configuration intermédiaire dans laquelle le premier axe mobile d'articulation (9A) est dans sa position de service et le quatrième axe mobile d'articulation (16) est contenu dans le plan de référence, et une configuration finale où le premier axe mobile d'articulation (9A) est au moins approximativement en sa position de repos et où le quatrième axe mobile d'articulation (16) est dans une position au moins approximativement symétrique, par rapport audit plan, de la position de ce quatrième axe mobile d'articulation (16) dans la configuration de départ de l'ensemble déformable.

2. Dispositif selon la revendication 1, caractérisé en ce que le premier axe mobile d'articulation (9A) est constitué par une extrémité partiellement cylindrique du levier, engagée dans un logement cylindrique transversal ménagé dans une noix (11) adaptée à coulisser, perpendiculairement à l'axe de coulissement et aux axes fixes et mobiles d'articulation.

3. Dispositif selon la revendication 1 ou la revendication 2, caractérisé en ce que le second axe mobile d'articulation (15) est disposé sur le levier (9) entre les premiers axes fixe (10) et mobile (9A) d'articulation.

4. Dispositif selon la revendication 3, caractérisé en ce que le second axe mobile d'articulation (15) est sensiblement à mi-chemin entre ces premiers axes fixe (10) et mobile (9A) d'articulation.

5. Dispositif selon l'une quelconque des revendications 1 à 4, caractérisé en ce que le sens unique de déplacement (F) est orienté vers l'opposé de l'axe de coulissement (Z-Z).

6. Dispositif selon l'une quelconque des revendications 1 à 4, caractérisé en ce que la tige de commande (17) est située entre les premier (10) et second (13) axes fixes d'articulation, et entre les second (15) et quatrième (16) axes mobiles d'articulation.

7. Dispositif selon l'une quelconque des revendications 1 à 6, caractérisé en ce que le quatrième axe mobile d'articulation (16) est à des distances au moins approximativement égales vis à vis du second axe fixe d'articulation (13) et du second axe mobile d'articulation (15).

8. Dispositif selon l'une quelconque des revendications 1 à 7, caractérisé en ce que la tige de commande (17) est dédoublée en deux parties (17A, 17B) encadrant la bielle (12), elle-même dédoublée en deux branches (12A, 12B) encadrant la biellette (14), elle-même dédoublée en deux parties (14A, 14B) encadrant le levier (9).

9. Dispositif selon l'une quelconque des revendications 1 à 8, caractérisé en ce que le piston est télescopique.

10. Dispositif selon la revendication 9, caractérisé en ce que le piston comporte un piston central (3) engagé dans un piston tubulaire (2) lui-même engagé dans un corps fixe (1), des bielles (4) symétriques par rapport à l'axe de coulissement (Z-Z) étant montées pivotantes en une portion médiane autour d'axes (5) liés au piston tubulaire (2) et articulées, en une extrémité, sur des axes d'articulation (6) liés au corps fixe (1) et, en une autre extrémité, sur un axe commun d'articulation (7) lié au piston central (3), ces bielles comportant des lumières longitudinales (8) coopérant avec certains desdits axes (6, 7).

## Claims

1. Mechanical ejector device including an ejector piston movable along a sliding axis (Z-Z) between a rest position and a service position, the device further including, for double-acting actuation of the piston:
- a lever (9) substantially transverse to the sliding axis, articulated to a first fixed articulation axis (10) disposed transversely to and at a distance from a sliding axis and to a first mobile articulation axis (9A) coupled axially to the piston and movable along the sliding axis between a rest position and a service position, the lever further including a second mobile articulation axis (15);
- a first link (12) articulated to a second fixed articulation axis (13) and including third and fourth mobile articulation axes (18, 16);
- an actuator rod (17) substantially transverse to the sliding axis, articulated to the third mobile articulation axis (18) and adapted to displace the third mobile articulation axis longitudinally in a single displacement direction (F) from a rest position to a final position;
- a second link (14) articulated to the second mobile articulation axis (15) and to the fourth mobile articulation axis (16);
the lever, the first link, the actuator rod and the second link being such that the fixed and mobile articulation axes are parallel to each other and perpendicular to the sliding axis and to the actuator rod, said fixed articulation axes being offset parallel to the sliding axis, and the first link and the second link forming a deformable assembly having a start configuration in which the first and third mobile articulation axes (9A, 18) are in their respective rest positions and the fourth mobile articulation axis (16) is behind a reference plane (P) containing the second fixed and mobile articulation axes (13, 15), where "behind" relates to the direction of displacement of the third mobile articulation axis (18), the deformable assembly having an intermediate configuration in which the first mobile articulation axis (9A) is in its service position and the fourth mobile articulation axis (16) is in the reference plane, and a final configuration in which the first mobile articulation axis (9A) is at least approximately in its rest position and in which the fourth mobile articulation axis (16) is in a position relative to said plane at least approximately symmetrical to the position of the fourth mobile articulation axis (16) in the start configuration of the deformable assembly.

2. Device according to claim 1 characterised in that the first mobile articulation axis (9A) comprises a partially cylindrical end of the lever engaged in a transverse cylindrical housing in a nut (11) adapted to slide perpendicularly to the sliding axis and to the fixed and mobile articulation axes.

3. Device according to claim 1 or claim 2 characterised in that the second mobile articulation axis (15) is on the lever (9) between the first fixed and mobile articulation axes (10, 9A).

4. Device according to claim 3 characterised in that the second mobile articulation axis (15) is substantially halfway between the first fixed and mobile articulation axes (10, 9A).

5. Device according to any one of claims 1 to 4 characterised in that the single direction of displacement (F) is away from the sliding axis (Z-Z).

6. Device according to any one of claims 1 to 4 characterised in that the actuator rod (17) is between the first and second fixed articulation axes (10, 13) and between the second and fourth mobile articulation axes (15, 16).

7. Device according to any one of claims 1 to 6 characterised in that the fourth mobile articulation axis (16) is at at least approximately equal distances from the second fixed articulation axis (13) and the second mobile articulation axis (15).

8. Device according to any one of claims 1 to 7 characterised in that the actuator rod (17) is divided into two parts (17A, 17B), one on either side of the first link (12) which is divided into two branches (12A, 12B) one on either side of the second link (14) which is divided into two parts (14A, 14B), one on either side of the lever (9).

9. Device according to any one of claims 1 to 8 characterised in that the piston is telescopic.

10. Device according to claim 9 characterised in that the piston includes a central piston (3) inserted in a tubular piston (2) inserted in a fixed body (1), first links (4) symmetrical about the sliding axis (Z-Z) being pivotally mounted in a median portion to pivot about axes (5) linked to the tubular piston (2) and articulated at one end to articulation axes (6) linked to the fixed body (1) and at the other end to a common articulation axis (7) linked to the central piston (3), the first links incorporating longitudinal openings (8) cooperating with some of said axes (6, 7).

## Patentansprüche

1. Mechanische Ausstoßvorrichtung mit einem Ausstoßkolben, der entlang einer Gleitachse (Z-Z) zwischen einer Ruheposition und einer Betriebsposition beweglich ist, wobei diese Vorrichtung außerdem für die Hin- und Herbewegung dieses Kolbens folgendes aufweist:
- einen Hebel (9), der im wesentlichen transversal zur Gleitachse ist und einerseits auf einer ersten ortsfesten Gelenkachse (10), die transversal in einem Abstand von der Gleitachse angeordnet ist, und andererseits auf einer ersten beweglichen Gelenkachse (9A), die axial an den Kolben angekuppelt ist und entlang der Gleitachse zwischen einer Ruheposition und einer Betriebsposition beweglich ist, gelenkig gelagert ist, wobei dieser Hebel außerdem eine zweite bewegliche Gelenkachse (15) aufweist;
- ein Zwischenglied (12), das auf einer zweiten ortsfesten Gelenkachse (13) gelenkig gelagert ist und dritte (18) und vierte (16) bewegliche Gelenkachsen aufweist;
- ein Steuerstange (17), die im wesentlichen transversal zur Gleitachse ist, auf der dritten beweglichen Gelenkachse (18) gelenkig gelagert ist und dafür ausgelegt ist, longitudinal zu sich selbst diese dritte bewegliche Gelenkachse in einer einzigen Verschiebungsrichtung (F) aus einer Ruheposition bis in eine Endposition mitzuführen;
- einen Schwingarm (14), der einerseits auf der zweiten beweglichen Gelenkachse (15) und andererseits auf der vierten beweglichen Gelenkachse (16) gelenkig gelagert ist;
wobei dieser Hebel, dieses Zwischenglied, diese Steuerstange und dieser Schwingarm so sind, daß die ortsfesten oder beweglichen Gelenkachsen parallel zueinander sind, wobei sie gleichzeitig zur Gleitachse und der Steuerstange senkrecht sind, wobei die ortsfesten Gelenkachsen parallel zur Gleitachse verschoben sind und das Zwischenglied und der Schwingarm eine deformierbare Einheit mit einer Ausgangskonfiguration, in der sich die erste (9A) und dritte (18) der beweglichen Gelenkachsen in ihren jeweiligen Ruhepositionen befinden und sich die vierte bewegliche Gelenkachse (16) in bezug auf eine die zweite ortsfeste Gelenkachse (13) und die zweite bewegliche Gelenkachse (15) enthaltende Bezugsebene (P) entgegengesetzt zur Verschiebungsrichtung der dritten beweglichen Gelenkachse (18) befindet, bilden, wobei diese deformierbare Einheit eine Zwischenkonfiguration, in der sich die erste bewegliche Gelenkachse (9A) in ihrer Betriebsposition befindet und die vierte bewegliche Gelenkachse (16) in der Bezugsebene liegt, und eine Endkonfiguration aufweist, in der sich die erste bewegliche Gelenkachse (9A) zumindest näherungsweise in ihrer Ruheposition befindet und in der sich die vierte bewegliche Gelenkachse (16) in einer in bezug auf die Ebene zumindest näherungsweise symmetrischen Position zur Position dieser vierten beweglichen Gelenkachse (16) in der Ausgangskonfiguration der deformierbaren Einheit befindet.

2. Vorrichtung nach Anspruch 1, dadurch gekennzeichnet, daß die erste bewegliche Gelenkachse (9A) durch ein teilweise zylindrisches Ende des Hebels gebildet ist, das in eine transversale zylindrische Aufnahme eingefügt ist, die in einer Nuß (11) ausgespart ist, welche dafür ausgelegt ist, senkrecht zur Gleitachse und zu den ortsfesten und beweglichen Gelenkachsen zu gleiten.

3. Vorrichtung nach Anspruch 1 oder 2, dadurch gekennzeichnet, daß die zweite bewegliche Gelenkachse (15) auf dem Hebel (9) zwischen der ersten ortsfesten Gelenkachse (10) und der ersten beweglichen Gelenkachse (9A) angeordnet ist.

4. Vorrichtung nach Anspruch 3, dadurch gekennzeichnet, daß die zweite bewegliche Gelenkachse (15) im wesentlichen auf halbem Weg zwischen dieser ersten ortsfesten Gelenkachse (10) und dieser ersten beweglichen Gelenkachse (9A) gelegen ist.

5. Vorrichtung nach einem der Ansprüche 1 bis 4, dadurch gekennzeichnet, daß die einzige Verschiebungsrichtung (F) entgegengesetzt zur Gleitachse (Z-Z) ausgerichtet ist.

6. Vorrichtung nach einem der Ansprüche 1 bis 4, dadurch gekennzeichnet, daß die Steuerstange (17) zwischen der ersten ortsfesten Gelenkachse (10) und der zweiten ortsfesten Gelenkachse (13) und zwischen der zweiten beweglichen Gelenkachse (15) und der vierten beweglichen Gelenkachse (16) gelegen ist.

7. Vorrichtung nach einem der Ansprüche 1 bis 6, dadurch gekennzeichnet, daß sich die vierte bewegliche Gelenkachse (16) gegenüber der zweiten ortsfesten Gelenkachse (13) und der zweiten beweglichen Gelenkachse (15) in zumindest näherungsweise gleichen Abständen befindet.

8. Vorrichtung nach einem der Ansprüche 1 bis 7, dadurch gekennzeichnet, daß die Steuerstange (17) in zwei Teile (17A, 17B) aufgespalten ist, die das Zwischenglied (12) einrahmen, das seinerseits in zwei Äste (12A, 12B) aufgespalten ist, die den Schwingarm (14) einrahmen, der seinerseits in zwei Teile (14A, 14B) aufgespalten ist, die den Hebel (9) einrahmen.

9. Vorrichtung nach einem der Ansprüche 1 bis 8, dadurch gekennzeichnet, daß der Kolben ein Teleskopkolben ist.

10. Vorrichtung nach Anspruch 9, dadurch gekennzeichnet, daß der Kolben einen zentralen Kolben (3), der in einen röhrenförmigen Kolben (2) eingefügt ist, welcher seinerseits in einen ortsfesten Körper (1) eingefügt ist, aufweist, wobei in bezug auf die Gleitachse (Z-Z) symmetrische Zwischenglieder (4) in einem Mittelabschnitt um mit dem röhrenförmigen Kolben (2) verbundene Achsen (5) schwenkbar angebracht sind und an einem Ende auf mit dem ortsfesten Körper (1) verbundenen Gelenkachsen (6) und an einem anderen Ende auf einer gemeinsamen, mit dem zentralen Kolben (3) verbundenen Gelenkachse (7) gelenkig gelagert sind, wobei diese Zwischenglieder longitudinale Langlöcher (8) aufweisen, die mit bestimmten der Achsen (6, 7) zusammenwirken.
